# EUROPEAN PATENT SPECIFICATION

(11) **EP 1 184 849 B1**
(45) Date of publication and mention of the grant of the patent: **15.03.2006**
(21) Application number: 00311542.5
(22) Date of filing: 21.12.2000
(51) Int. Cl.: G11B 7/0045

(54) **Information recording method**
Informationsaufzeichnungsverfahren
Procédé d'enregistrement d'information

(30) Priority: 31.08.2000 JP 2000264151
(43) Date of publication of application: 06.03.2002
(73) Proprietor: Japan as represented by Secretary of Agency of Industrial Science and Technology, Chiyoda-ku, Tokyo-to (JP)
(72) Inventor: Fukuda, Takashi, Tsukuba, Ibakari (JP); Matsuda, Hiroo, Tsukuba, Ibaraki (JP); Sumaru, Kimio, Tsukuba, Ibaraki (JP); Kimura, Tatsumi, Tsuchiura, Ibaraki (JP); Kato, Masao, Tsukuba, Ibaraki (JP)
(74) Representative: Hayes, Adrian Chetwynd

(56) References cited:
- EGAMI C ET AL: "Two-stage optical data storage in azo polymers" 7TH MICROOPTICS CONFERENCE. MOC'99, CHIBA, JAPAN, 14-16 JULY 1999, vol. 39, no. 3B, pages 1558-1561, XP002222030 Japanese Journal of Applied Physics, Part 1 (Regular Papers, Short Notes & Review Papers), March 2000, Publication Office, Japanese Journal Appl. Phys, Japan ISSN: 0021-4922
- RAMANUJAM P S ET AL: "INSTANT HOLOGRAPHY" APPLIED PHYSICS LETTERS, AMERICAN INSTITUTE OF PHYSICS. NEW YORK, US, vol. 74, no. 21, 24 May 1999 (1999-05-24), pages 3227-3229, XP000834781 ISSN: 0003-6951
- RAMANUJAM P S ET AL: "ATOMIC FORCE AND OPTICAL NEAR-FIELD MICROSCOPIC INVESTIGATIONS OF POLARIZATION HOLOGRAPHIC GRATINGS IN A LIQUID CRYSTALLINE AZOBENZENE SIDE-CHAIN POLYESTER" APPLIED PHYSICS LETTERS, AMERICAN INSTITUTE OF PHYSICS. NEW YORK, US, vol. 68, no. 10, 4 March 1996 (1996-03-04), pages 1329-1331, XP000582291 ISSN: 0003-6951
- ROCHON P ET AL: "OPTICALLY INDUCED SURFACE GRATINGS ON AZOAROMATIC POLYMER FILMS" APPLIED PHYSICS LETTERS, AMERICAN INSTITUTE OF PHYSICS. NEW YORK, US, vol. 66, no. 2, 9 January 1995 (1995-01-09), pages 136-138, XP000486060 ISSN: 0003-6951
- KIM D Y ET AL: "Laser-induced holographic surface relief gratings on nonlinear optical polymer films" APPLIED PHYSICS LETTERS, 6 MARCH 1995, USA, vol. 66, no. 10, pages 1166-1168, XP002222031 ISSN: 0003-6951

## Description

The present invention relates to an improvement in an information recording method. More particularly, the invention relates to an improvement in an optical information recording method in which a thin film of a light-sensitive polymeric compound having a chemical structure of azobenzene is irradiated with a light beam of a specified wavelength to produce a surface pattern with recesses and rises.

It is reported in Applied Physics Letters, volume 66 (1995), pages 136-138 and pages 1166-1168 that, when a thin film of a polymeric compound having a chemical structure of azobenzene is irradiated with a light beam of a wavelength matching the wavelength of the absorption band of the polymeric compound, such as the argon laser beam of 515-458 nm wavelengths, movement of the polymer chains is induced corresponding to the geometrical profile of the laser beam and polarization of the light to produce a surface pattern with recesses and rises.

This phenomenon is caused by the mechanism in which, when a thin film of the polymeric compound having the structure of azobenzene is irradiated patternwise with light of the specified wavelength, the light beam has an effect of causing migration of the polymer molecules from the strongly irradiated areas to the weakly irradiated or non-irradiated areas resulting in a patternwise rugged surface condition of the thin film. The thus formed surface ruggedness of the thin film is reversibly erasable by a subsequent irradiation with a second light of a different wavelength or by a heat treatment so as to regain the uniform thin film of the polymeric compound. Accordingly, the rewritability of the polymeric thin film without necessitating a development treatment can be utilized for the reversible formation of a hologram and diffraction grating as well as for the applications as a high-density optical information recording method in view of the advantageous characteristics of accurate recording and reproduction of the information corresponding to the profile of the light beam and the polarized state of the light.

The most serious problem encountered in the development of this information recording method by utilizing the above mentioned unique phenomenon is the slow velocity of the morphology changes of the polymeric thin film. Though dependent on the irradiance of the irradiating light beams for writing, for example, a patterned surface ruggedness with a height difference of about 100 nm between a recess and a rise can be formed only by a very prolonged irradiation for from several minutes to several tens of minutes which rules out the possibility of practical application to information recording technology in which speed of writing is an essential requirement.

In view of the above described problems in the information recording method of irradiating a thin film of a polymeric compound having a chemical structure of azobenzene with a light beam due to the velocity of the morphological changes caused in the polymeric thin film, the present invention has an object to provide an improvement by which the velocity of the morphological changes in the azobenzene-based polymeric thin film can be greatly increased.

Egami et al "Two-stage optical data storage in azo polymers" Jap J Appl Phys, vol 39 (2000) 1558-1561 discloses surface-modulated bit memories and surface-modulated holographic memories using two recording mechanisms: photoanisotropic modulation and surface-shape modulation.

The present invention is set out in claim 1. An embodiment provides an improvement, in a method for optical information recording by patternwise irradiating a thin film of a polymeric compound having a chemical structure of azobenzene with a first light beam falling in a first irradiation spot on the polymeric thin film so as to effect a morphological change of the polymeric thin film, which comprises simultaneously irradiating the polymeric thin film patternwise with a second light beam of substantially the same wavelength as the first light beam falling in a second irradiation spot giving an irradiance different from or, preferably, smaller by at least 5% than that of the first irradiation spot, the diameter of the second irradiation spot being larger by at least 1% or, preferably, by at least 5% than the diameter of the first irradiation spot and the second irradiation spot enveloping the first irradiation spot.

It is preferable that the intensity of the second light beam is not sufficiently large as to cause a morphological change in the polymeric thin film.
Figure 1 is a schematic illustration showing over-lapping of the first and second light spots.
Figure 2 is a graph showing the radial distribution of irradiance by the first and second light beams.
Figure 3 is a diagram showing an optical system for producing the first and second light beams overlapping on the polymeric film.
Figures 4 and 5 are each a graph showing the experimental data obtained in Examples 1 and 2, respectively, for the height difference in the rugged surface of the polymeric thin film as a function of the irradiance by the second light beam.

As is understood from the above summarizing description, the scope of the improvement provided by the present invention lies in the simultaneous irradiation of the polymeric thin film with a second light beam or bias light beam having a diameter sufficiently large to envelop the irradiation spot formed by the first light beam or writing light beam. This means is so effective that the velocity of the morphological changes caused by the irradiation of the first light beam can be increased by more than five times.

The information-recording material used in the invention is a polymeric compound having a chemical structure of azobenzene in the molecular structure. The above mentioned azobenzene structure can be a constituent of the main chain or the pendant chains of the polymeric molecule as respectively represented by the general formula 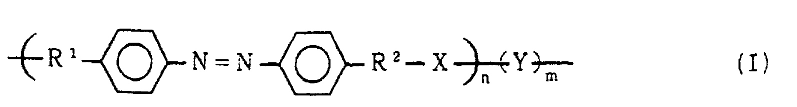
in which R¹ is a divalent group having an electron-donating group, R² is a divalent group having an electron-attracting group, X and Y are each a single bond or a structural unit forming a polymeric chain and the subscripts m and n are each a positive integer, or represented by the general formula 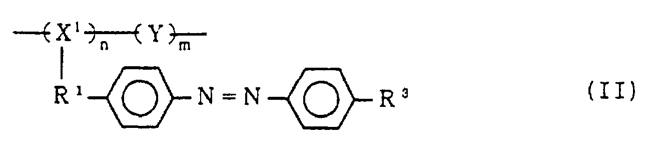
in which each symbol other than R³ and X¹ has the same meaning as defined above. R³ is an electron-attracting group. X¹ is a tervalent unit. The groups X¹ and Y can optionally form a cyclic structure by being bonded at the terminals thereof.

The electron-donating group denoted by R¹ and the electron-attracting group denoted by R² or R³ in the general formulae (I) and (II) jointly act to promote the cis/trans photoisomerization of the azobenzene structure contributing to an increase in the velocity of the morphological changes in the polymeric thin film for information writing.

Examples of the divalent electron-donating group R¹ include the residues obtained by eliminating a hydrogen atom from an amino group, alkylamino group, alkoxyl group or ether group. Examples of the divalent electron-attracting group R² include a dicyanoethylene group, tricyanoethylene group, carbonyl group, carbonyloxy group, carbonylmethylene group and sulfone group. Examples of the monovalent electron-attracting group R³ include halogen atoms, i.e. fluorine, chlorine, bromine and iodine atoms, cyano group, nitro group, carboxyl group, acyl groups, sulfonyl group, dicyanovinyl group and tricyanovinyl group.

The groups denoted by X and Y in the general formula (I) forming the main chain structure of the polymer molecule are each not an essential functional group but are desirable in order to impart the polymer with adequate material characteristics such as thermal and mechanical durability and solubility behavior in organic solvents.

Examples of the groups denoted by X include those monomeric units derived from ethylenically unsaturated monomeric compounds such as acrylic acid, methacrylic acid, styrene, vinyl acetate, vinyloxycarboxylic acid, crotonic acid, alkenes, cycloalkenes, bicycloalkenes, maleimide, isopropenylbenzene, fumaric acid, vinyl carbazole, butadiene, acrylamide, methacrylamide and vinyl alkyl ketones, as well as mono- and dihydroxyphenylene groups, imido groups and dicarbonyl group.

Examples of the groups denoted by Y include those monomeric units derived from ethylenically unsaturated monomeric compounds such as acrylic acid, methacrylic acid, styrene, vinyl acetate, vinyloxycarboxylic acid, crotonic acid, alkenes, cycloalkenes, bicycloalkenes, maleimide, isopropenylbenzene, fumaric acid, vinyl carba-zole, butadiene, acrylamide, methacrylamide and vinyl alkyl ketones as well as mono- and dihydroxyphenylene groups, alkylene groups, imido groups, dicarbonyl group and alkylidene groups.

The polymeric compound having an azobenzene structure should have a number-average molecular weight in the range from 1,000 to 1,000,000 or, preferably, from 3,000 to 100,000.

The thin film of the above described azobenzene structure-containing polymeric compound can be formed on the surface of a substrate by the method of spin-coating or casting with a solution of the polymeric compound prepared by dissolving the polymer in an organic solvent such as chloroform, dichloromethane, cyclohexanone or tetrahydro-furane in a concentration of 1 to 30 mass % or, preferably, 3 to 10 mass %. When the spin-coating method is undertaken, the spinner is driven at 100 to 5,000 rpm or, preferably, 500 to 2,000 rpm for 10 to 500 seconds. The thin film of the polymeric compound has a thickness in the range from 10 nm to 1 mm or, preferably, from 10 nm to 100 mm or, more preferably, from 300 nm to 10 mm. When the film thickness is too large, the polymer film suffers from problems such as distortion and crack formation on the surface while, when the film thickness is too small, the polymer film is under a constraining influence of the substrate surface resulting in difficulty of formation of patternwise ruggedness of the surface.

In consideration of the efficiency in the subsequent whole-surface light-exposure for erasure of the recorded information, it is desirable that the thin film of the polymeric compound is formed on a very smooth surface of a material as the substrate having high transparency to visible light such as glass and fused silica glass plates.

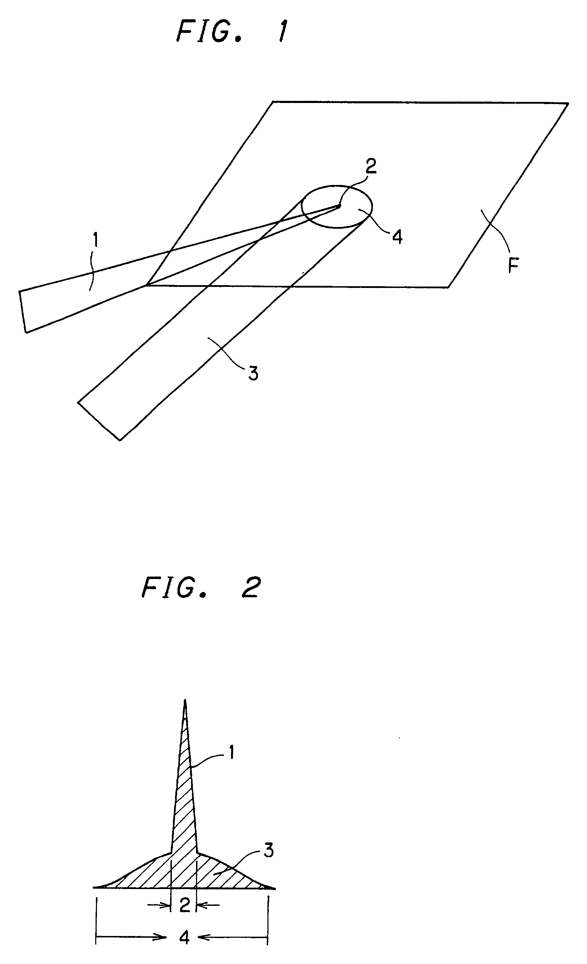

In the following, the improved method of the present invention is described in detail by reference to the accompanying drawings. Figure 1 of the drawings is a schematic illustration of overlapping of the first and second irradiation spots, in which the thin film F of the polymeric compound is irradiated patternwise with the first light beam 1 to fall in an irradiation spot 2 on the polymeric thin film F where a morphological change is induced forming a rugged surface with recesses and rises for information recording while the polymeric thin film F is simultaneously irradiated with the second light beam 3 to fall in another irradiation spot 4 which is broader than the first irradiation spot 2 enveloping the same. The second light beam 3 can be a light beam of uniform intensity or an interference fringe light beam. Use of the light of an interference fringe pattern is advantageous in respect of a further improvement in the pattern-forming velocity.

Figure 2 is a graph schematically showing the distri-bution of irradiance in the radial direction within the irradiation spots 2,4 formed by the first and second light beams 1,3, respectively.

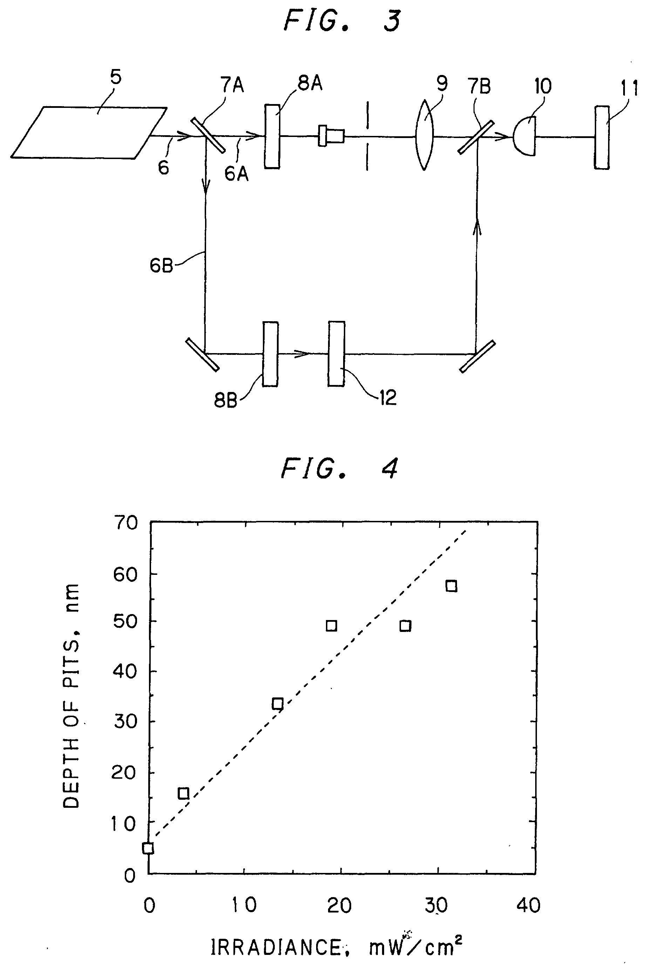

The optical system for conducting the patternwise irradiation of the polymeric thin film with dual light beams 1,3 can be constructed by utilizing a laser irradiation instrument used conventionally for pit formation in CDs and DVDs or a near-field light microscope. Figure 3 illustrates a diagram of such an optical system in which the laser beam 6 emitted from the light beam source 5 is divided on a half mirror 7A into the beam 6A as the first light beam for writing and the beam 6B for bias irradiation. The writing beam 6A passes through the wavelength plate 8A, collimator lens 9, half mirror 7B and condenser lens 10 to arrive at the polymeric thin film 11 where a morphological change of the polymer film is induced. On the other hand, the bias beam 6B passes through a second wavelength plate 8B and a filter 12 for intensity attenuation and becomes combined on the half mirror 7B with the writing beam 6A.

The light source 5 is selected from those emitting a light beam of a wavelength matching with the wavelength of the absorption band of the polymeric compound, for example, in the range from 250 to 550 nm. Examples of suitable light sources include those emitting a continuous-spectrum light such as heavy-hydrogen lamps, xenon lamps, halogen lamps and tungsten lamps and those emitting a line-spectrum light such as mercury lamps, hollow-cathode lamps, discharge lamps with a rare gas, hydrogen, sodium or cadmium. Particularly preferable are continuous-oscillation laser beam emitters having high interference such as helium-cadmium lasers, krypton ion lasers and argon ion lasers. Nitrogen lasers and pulse lasers utilizing the higher harmonic wave oscillation of an infrared laser can also be used here.

The irradiance by the first light beam for writing is, assuming that the first light beam is stronger than the second, in the range from 1 to 500 mW/cm² or, preferably, from 10 to 200 mW/cm² within the first spot 2 on the polymeric film 11. When the irradiance is too high, degradation of the material may eventually be caused by the photochemical decomposition of the azobenzene structure in the polymer molecules. It is desirable that polarization of the irradiation light beam is controlled by means, for example, of a wavelength plate. The polarized light can be a linear polarized light, of which the oscillation plane of the electric field is horizontal, vertical or inclined by 45 degrees or a circular polarized light.

The irradiance by the bias light is selected in the range from 1% to 1,000% or, preferably, from 10% to 100% of the irradiance by the writing light beam.

The patterned ruggedness in the polymeric thin film can be utilized, beside information recording, for light switches, light couplers, image correlaters, optical space and modulators.

In the following, Examples are given to illustrate the present invention in more detail.

### Example 1

A 5 mass % polymer solution was prepared by dissolving, in chloroform, a copolymer having a number-average molecular weight of 5,900 and a glass transition point of 128 °C and consisting of 36% by moles of monomeric units derived from an azobenzene structure-containing methacrylate monomer and 64% by moles of monomeric units derived from methyl methacrylate as shown by the monomeric unit formula below, in which the subscripts m and n are each a positive integer. 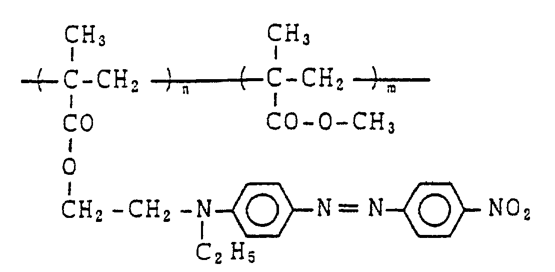 A 1 mm thick glass plate as a substrate was coated with the thus prepared polymer solution by the spin-coating method on a spinner rotating at 700 rpm for 50 second followed by evaporation of the solvent to give a dried thin film of the polymer having a thickness of 1 mm.
The thin film of the polymer thus obtained was irradiated patternwise for 60 minutes with an argon ion laser beam of 488 nm wavelength as the writing light beam and bias light beam to form a pattern of surface ruggedness. The writing light was a linear-polarized light, of which the oscillation plane of electric field was inclined by 45 degrees, giving an irradiance of 181.85 mW/cm² on the spot. The bias light was an interference fringe light of a linear polarized light with about 3 mm fringe intervals, of which the oscillation plane of electric field was in the vertical direction, giving an irradiance controlled within a range up to 31.2 mW/cm² on the irradiation spot.

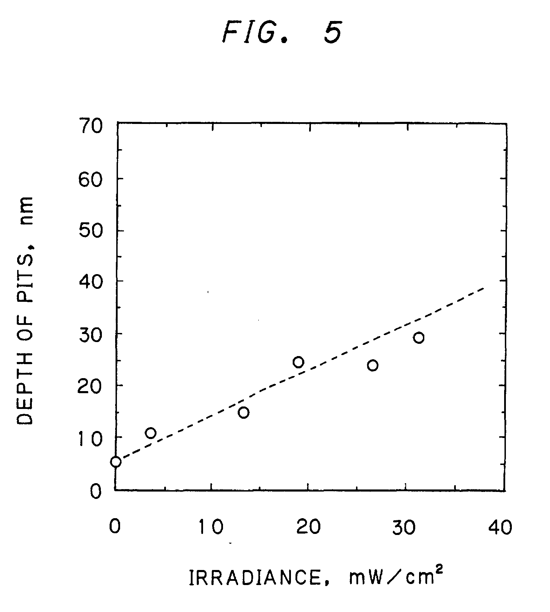

Figure 4 is a graph showing the height difference between recesses or pits and rises in the thus formed rugged surface as a function of the irradiance by the bias light. As is shown in this graph, the height difference, which was 5.8 nm in the absence of the bias light, was increased approximately linearly as the irradiance by the bias light was increased reaching 57.3 nm when the irradiance was 89.96 mW/cm², i.e. about 10 times the height difference in the absence of the bias light.

### Example 2

The experimental procedure was substantially the same as in Example 1 except for the replacement of the linear-polarized light for the bias light with a circular-polarized light.

Figure 5 is a graph showing the height difference between recesses or pits and rises in the thus formed rugged surface as a function of the irradiance by the bias light. As is shown in this graph, the height difference, which was 5.8 nm in the absence of the bias light, was increased approximately linearly as the irradiance by the bias light was increased, reaching 28.9 nm when the irradiance was 31.2 mW/cm², i.e. about 5 times the height difference in the absence of the bias light.

## Claims

1. A method of optical information recording by patternwise irradiating a thin film of a polymeric compound having a chemical structure of azobenzene with a first light beam (1) falling in a first irradiation spot (2) on the polymeric thin film (F) to effect a morphological change of the polymeric thin film, **characterized in that** it comprises simultaneously irradiating the polymeric thin film patternwise with a second light beam (3) of substantially the same wavelength as the first light beam falling in a second irradiation spot (4), the diameter of the second irradiation spot being larger than the diameter of the first irradiation spot and the second irradiation spot enveloping the first irradiation spot.

2. The method as claimed in claim 1 in which the irradiance by the second light beam is in the range from 1% to 1,000% of the irradiance by the first light beam.

## Patentansprüche

1. Verfahren zum Aufzeichnen optischer Informationen durch musterartiges Bestrahlen einer Dünnschicht aus einer Polymerverbindung mit der chemischen Struktur von Azobenzol mit einem ersten Lichtstrahl (1), der in einem ersten Bestrahlungsfleck (2) auf die Polymer-Dünnschicht (F) fällt, um eine morphologische Änderung der Polymer-Dünnschicht zu bewirken, **dadurch gekennzeichnet, dass** es das gleichzeitige musterartige Bestrahlen der Polymer-Dünnschicht mit einem in einen zweiten Bestrahlungsfleck (4) fallenden zweiten Lichtstrahl (3) mit im Wesentlichen derselben Wellenlänge wie der erste Lichtstrahl umfasst, wobei der Durchmesser des zweiten Bestrahlungsflecks größer als der Durchmesser des ersten Bestrahlungsflecks ist und der zweite Bestrahlungsfleck den ersten Bestrahlungsfleck umgibt.

2. Verfahren nach Anspruch 1, bei dem die Strahlungsintensität des zweiten Lichtstrahls im Bereich von 1 % bis 1000 % der Strahlungsintensität des ersten Lichtstrahls liegt.

## Revendications

1. Procédé d'enregistrement optique d'informations en irradiant suivant un motif un film mince d'un composé polymère ayant une structure chimique azobenzène avec un premier faisceau lumineux (1) incident à un premier point d'irradiation (2) sur le film mince polymère (F) afin d'effectuer un changement morphologique du film mince polymère, **caractérisé en ce qu'**il comprend l'irradiation simultanée du film mince polymère suivant un motif avec un deuxième faisceau lumineux (3) de longueur d'onde pratiquement identique à celle du premier faisceau lumineux incident à un deuxième point d'irradiation (4), le diamètre du deuxième point d'irradiation étant plus grand que le diamètre du premier point d'irradiation et le deuxième point d'irradiation enveloppant le premier point d'irradiation.

2. Procédé selon la revendication 1, dans lequel la radiance du deuxième faisceau lumineux se situe dans la plage de 1% à 1 000% de la radiance du premier faisceau lumineux.
